# EUROPÄISCHE PATENTANMELDUNG

(11) **EP 2 518 236 A2**
(43) Veröffentlichungstag der Anmeldung: **31.10.2012**
(21) Anmeldenummer: 12157419.8
(22) Anmeldetag: 29.02.2012
(51) Int. Cl.: E04F 13/08, F16B 13/14

(54) **Ankervorrichtung zum Befestigen einer Platte an einer tragenden Grundstruktur**

(30) Priorität: 27.04.2011 DE 102011017606
(71) Anmelder: HILTI Aktiengesellschaft, 9494 Schaan (LI)
(72) Erfinder: Bee, Peter, 7307 Jenins (CH)

(57) **Zusammenfassung**

Die Erfindung betrifft eine Ankervorrichtung (100) zum Befestigen einer Platte (2) an einer Grundstruktur (1), mit einer ersten Ankerstange (10), die in einer in der Grundstruktur vorgesehenen Grundstrukturbohrung (3) verankerbar ist, und einer zweiten Ankerstange (20), die in einer in der Platte vorgesehenen Plattenbohrung verankerbar ist, und an der die erste Ankerstange festlegbar ist, wobei die zweite Ankerstange zumindest einen Injektionskanal (22) aufweist, über den zum Verankern der zweiten Ankerstange in der Plattenbohrung eine erhärtende Masse (6) in die Plattenbohrung (4) injizierbar ist. Erfindungsgemäss ist vorgesehen, dass die zweite Ankerstange (20) eine Bohrung (27) aufweist, in welcher die erste Ankerstange aufgenommen und festgelegt ist.

## Beschreibung

Die Erfindung betrifft eine Ankervorrichtung zum Befestigen, insbesondere zum beabstandeten Befestigen, einer Platte, vorzugsweise einer Wandverkleidungsplatte, an einer Grundstruktur, insbesondere einer Wand, gemäss dem Oberbegriff des Anspruchs 1. Eine solche Ankervorrichtung ist ausgestattet mit einer ersten Ankerstange, die in einer in der Grundstruktur vorgesehenen Grundstrukturbohrung verankerbar ist, und einer zweiten Ankerstange, die in einer in der Platte vorgesehenen Plattenbohrung verankerbar ist, und an der die erste Ankerstange festlegbar ist, wobei die zweite Ankerstange zumindest einen Injektionskanal aufweist, über den zum Verankern der zweiten Ankerstange in der Plattenbohrung eine erhärtende Masse in die Plattenbohrung injizierbar ist.

Eine gattungsgemässe Ankervorrichtung ist aus der EP 1 036 897 A1 bekannt. Diese Druckschrift beschreibt ein Befestigungselement zur Abstandsbefestigung einer Fassade an einem Mauerwerk, welches einen stabförmigen Maueranker sowie eine Spezialschraube als Fassadenhalter aufweist. Der Fassadenhalter weist einen koaxialen Injektionskanal in Form eines Sacklochs auf. An einem Ende weist der Maueranker ein koaxiales Innengewinde auf, in das der als Schraube ausgebildete Fassadenhalter eingeschraubt ist.

Weitere Ankervorrichtungen gehen aus der EP 0 863 353 A2 und der EP 0 351 668 A1 hervor.

Darüber hinaus sind mehrteilige Ankervorrichtungen bestehend aus einer Befestigungseinrichtung und einem Abstandshalter bekannt, wobei die Befestigungseinrichtung zur Aufnahme von Zugkräften dient, und wobei der Abstandshalter im Zwischenraum zwischen Platte und Grundstruktur angeordnet wird und Druckkräfte überträgt. Da die Breite des Zwischenraums in der Praxis häufig stark variiert, beispielsweise zwischen 20 mm und 300 mm, ist es bei dieser Lösung erforderlich, unterschiedlich dimensionierte Abstandshalter bereitzustellen, die auf Grundlage von vorausgegangenen Messungen gefertigt werde. Dies geht mit einem entsprechenden Aufwand einher.

Aufgabe der Erfindung ist es, eine Ankervorrichtung anzugeben, die bei besonders hoher Zuverlässigkeit besonders vielseitig einsetzbar ist und zugleich einen besonders geringen Aufwand mit sich bringt.

Die Aufgabe wird erfindungsgemäss durch eine Ankervorrichtung mit den Merkmalen des Anspruchs 1 gelöst. Bevorzugte Ausführungsformen sind in den abhängigen Ansprüchen angegeben.

Eine erfindungsgemässe Ankervorrichtung ist **dadurch gekennzeichnet, dass** die zweite Ankerstange eine Bohrung aufweist, in welcher die erste Ankerstange aufgenommen und festgelegt ist.

Ein erster Grundgedanke der Erfindung liegt in einer Ankervorrichtung, die sowohl Zug- als auch Druckkräfte zwischen einer Platte und einer hiervon beabstandeten Grundstruktur, insbesondere aus Beton, übertragen kann. Die Ankervorrichtung weist eine erste Ankerstange auf, welche, vorzugsweise chemisch, in der Grundstrukturbohrung verankert wird, sowie eine zweite Ankerstange, welche, vorzugsweise koaxial, an der ersten Ankerstange festgelegt wird, und welche chemisch in der Plattenbohrung verankert wird. Unter einer chemischen Verankerung kann insbesondere eine Verankerung mittels einer erhärtenden Masse, beispielsweise mittels eines organischen Harzes oder eines anorganischen Mörtels verstanden werden. Zur Verankerung der ersten Ankerstange in der üblicherweise als Sackloch ausgebildeten Grundstrukturbohrung kann zunächst die erhärtende Masse und anschliessend die erste Ankerstange in die Grundstrukturbohrung eingebracht werden. Zur Verankerung der zweiten Ankerstange in der Plattenbohrung weist die zweite Ankerstange einen Injektionskanal auf, der durch zumindest einen Teil der zweiten Ankerstange hindurch verläuft. Durch diesen Injektionskanal ist die erhärtende Masse in die Plattenbohrung einbringbar, nachdem die zweite Ankerstange in der Plattenbohrung angeordnet worden ist.

Hierauf aufbauend ist nach der Erfindung vorgesehen, dass die zweite Ankerstange, welche zur Verankerung in der Plattenbohrung vorgesehen ist und hierfür den Injektionskanal aufweist, zumindest in ihrem Kontaktbereich mit der ersten Ankerstange durchmessergrösser als die erste Ankerstange ausgebildet ist und eine Bohrung aufweist, in der die erste Ankerstange aufgenommen ist. Gemäss diesem Erfindungsgedanken weist die zweite Ankerstange sowohl den Injektionskanal als auch die Verbindungseinrichtung zum Verbinden der beiden Ankerstangen, nämlich die entsprechende Bohrung auf, das heisst wesentliche funktionale Merkmale der Ankervorrichtung sind an der zweiten Ankerstange konzentriert. Die erste Ankerstange hingegen kann besonders einfach, beispielsweise als Gewindestange ausgebildet sein. Diese erste Ankerstange ist es jedoch, die den Zwischenraum zwischen Platte und Grundstruktur durchläuft, und die bei einer variablen Zwischenraumbreite entsprechend in ihrer Länge angepasst werden muss. Da diese erste Ankerstange nun nach der Erfindung besonders einfach ausgestaltet sein kann, ist diese Längenanpassung aber in besonders einfacher Weise möglich und kann insbesondere vor Ort, beispielsweise durch einfaches Zurechtsägen einer Gewindestange, realisiert werden. Eine aufwändige Vorabfertigung speziell auf Mass dimensionierter Bauteile, die nach dem Stand der Technik unter Umständen erforderlich war, kann somit erfindungsgemäss entfallen, so dass der Kostenaufwand erfindungsgemäss besonders gering ist.

Da darüber hinaus erfindungsgemäss der Injektionskanal in der Durchmessergrösseren der beiden Ankerstangen angeordnet ist, ist ein besonders zuverlässiger Materialtransport und somit eine besonders zuverlässige Verankerung möglich. Insbesondere kann nach der Erfindung vorgesehen sein, dass die zweite Ankerstange mit dem Injektionskanal durchgängig durchmessergrösser als die erste Ankerstange ist.

Beispielsweise kann die Grundstruktur eine Wand, vorzugsweise der Gewölbebeton eines Tunnels oder Stollens sein. Die Platte kann beispielsweise eine Wandverkleidungsplatte sein.

Während die zweite Ankerstange mit dem Injektionskanal erfindungsgemäss chemisch an der Platte verankert wird, könnte die Verankerung der ersten Ankerstange an der Grundstruktur grundsätzlich auch rein mechanisch erfolgen. Besonders bevorzugt ist aber auch die erste Ankerstange chemisch in der Grundstruktur verankert.

Eine vorteilhafte Weiterbildung der Erfindung liegt darin, dass auf der ersten Ankerstange eine Elastomerscheibe zum Abdichten der Plattenbohrung angeordnet ist. Hierdurch kann einem unerwünschten Abfliessen der zur chemischen Verankerung der zweiten Ankerstange vorgesehenen erhärtenden Masse in den Zwischenraum zwischen Platte und Grundstruktur entgegengewirkt werden, so dass eine besonders zuverlässige Verankerung mit besonders gut definierten Lastwerten gegeben ist. Die Elastomerscheibe kann beispielsweise eine Gummischeibe sein.

Insbesondere ist es zweckmässig, dass die Elastomerscheibe an der zweiten Ankerstange anliegt. Hierdurch kann in besonders einfacher Weise eine besonders hohe Genauigkeit in den Abmessungen der chemischen Verankerungszone zwischen zweiter Ankerstange und Platte realisiert werden. Beispielsweise kann die zumindest bereichsweise durchmessergrössere zweite Ankerstange stirnseitig eine Ringschulter bilden, an welcher die Elastomerscheibe anliegt.

Eine weitere vorteilhafte Ausführungsform besteht darin, dass die Bohrung in der zweiten Ankerstange ein Innengewinde aufweist, in welches die erste Ankerstange eingeschraubt ist. Demgemäss ist die erste Ankerstange durch eine Schraubverbindung in der Bohrung in der zweiten Gewindestange festgelegt. Hierdurch wird in besonders einfacher Weise ein besonders zuverlässiger Verbund zwischen den Ankerstangen gewährleistet. Demgemäss weist die erste Ankerstange vorteilhafterweise zumindest im Bereich der Bohrung der zweiten Ankerstange ein Aussengewinde auf. Für eine verbesserte Ankerwirkung kann es auch vorteilhaft sein, dass die erste Ankerstange zumindest im Bereich der Grundstrukturbohrung ein Aussengewinde aufweist.

Beispielsweise für eine besonders einfache Fertigung ist es zweckmässig, dass die erste Ankerstange zumindest einen Aussengewindegang aufweist, welcher sich über mindestens 90%, insbesondere mindestens 95%, 98% oder 99%, der Länge der ersten Ankerstange, also im wesentlichen über die gesamte Länge der ersten Ankerstange erstreckt. Gemäss dieser Ausführungsform kann ein und derselbe Gewindegang im Sinne einer Doppelfunktion sowohl zur Verbindung der beiden Ankerstangen als auch für eine verbesserte chemische Verankerung der ersten Ankerstange in der Grundstrukturbohrung dienen.

Eine weitere bevorzugte Ausführungsform der Erfindung liegt darin, dass auf der zweiten Ankerstange eine Dichtscheibe zum Abdichten der Plattenbohrung angeordnet ist. Hierdurch kann in besonders einfacher Weise die Genauigkeit in den Abmessungen der chemischen Verankerungszone zwischen zweiter Ankerstange und Platte noch weiter verbessert werden. Die Dichtscheibe kann zumindest einen Entlüftungskanal aufweisen, welcher insbesondere zur Plattenbohrung führt, und über welchen die Luft, die beim Injizieren von der erhärtenden Masse über den Injektionskanal in die Plattenbohrung verdrängt wird, entweichen kann. Der Entlüftungskanal kann auch als Indikatorkanal zum Nachweis einer Verfüllung der Plattenbohrung mit erhärtender Masse dienen: sobald beim Injizieren durch den Injektionskanal erhärtende Masse aus dem Entlüftungskanal austritt, weiss der Monteur, dass die Plattenbohrung mit Masse verfüllt ist.

Weiterhin ist es zweckmässig, dass auf der zweiten Ankerstange eine Haltemutter zum Unterstützen der Verankerung der zweiten Ankerstange in der Plattenbohrung angeordnet ist. Diese Haltemutter kann die chemische Verankerung der zweiten Ankerstange in der Plattenbohrung insbesondere formschlüssig unterstützen. Die Haltemutter kann mittels einer Sicherungsmutter gesichert werden.

Insbesondere kann vorgesehen sein, dass die Haltemutter über eine Kugelscheibe auf die Dichtscheibe wirkt. Demgemäss ist zwischen Haltemutter und Dichtscheibe eine Kugelscheibe, also eine Unterlegscheibe mit einer kalottenförmigen Kontaktoberfläche zur Dichtscheibe hin, angeordnet. Durch die Kugelscheibe kann die Zuverlässigkeit der Befestigung weiter erhöht werden, insbesondere in den Fällen, in denen die Plattenbohrung nicht senkrecht zur Plattenoberfläche verläuft.

Die Zuverlässigkeit der chemischen Verankerung kann weiter dadurch erhöht werden, dass auf der ersten Ankerstange zumindest ein Zentrierring angeordnet ist und/oder dass auf der zweiten Ankerstange zumindest ein Zentrierring angeordnet ist. Die Zentrierringe können gewährleisten, dass die jeweilige Ankerstange vollständig von erhärtender Masse umgeben ist.

Die Erfindung betrifft auch ein Bauwerk mit einer Grundstruktur, einer Platte und einer erfindungsgemässen Ankervorrichtung zum Befestigen der Platte an der Grundstruktur, wobei die Grundstruktur eine Grundstrukturbohrung aufweist, in der die erste Ankerstange verankert ist, und die Platte eine, vorzugsweise als Durchgangsbohrung, ausgebildete Plattenbohrung aufweist, in der die zweite Ankerstange verankert ist. Hierdurch können die Vorteile der erfindungsgemässen Ankerstange in einem Bauwerk realisiert werden.

Besonders bevorzugt ist es, dass die Ankervorrichtung auf ihrer der Grundstruktur abgewandten Seite in der Plattenbohrung versenkt ist. Insbesondere können die zweite Ankerstange und/oder die Haltemutter versenkt sein, dass heisst, sie stehen nicht über die Oberfläche der Platte hinaus. Hierdurch ist die Ankervorrichtung besonders gut geschützt, so dass die Zuverlässigkeit weiter erhöht ist.

Weiterhin ist es zweckmässig, dass die Ankervorrichtung auf ihrer der Grundstruktur abgewandten Seite von Mörtel, insbesondere Brandschutzmörtel, überdeckt ist, der sich in der Plattenbohrung befindet. Durch Versenken der Ankervorrichtung in der Plattenbohrung und Überdecken der Ankervorrichtung mit Brandschutzmörtel wird ein besonders zuverlässiger und dauerhafter Brandschutz geschaffen, was beispielsweise für Tunnelanwendungen vorteilhaft sein kann.

Besonders vorteilhaft ist es, dass die Plattenbohrung als Stufenbohrung ausgebildet ist. Eine solche Stufenbohrung weist einen durchmesserkleineren Bereich und einen durchmessergrösseren Bereich auf, wobei zweckmässigerweise die chemische Verankerung zwischen der zweiten Ankerstange und der Platte zumindest im durchmesserkleineren Bereich gegeben ist und/oder die Haltemutter zumindest bereichsweise im durchmessergrösseren Bereich angeordnet ist. Die zwischen den beiden Bereichen bestehende Ringstufe bildet einen Anschlag, gegen den die Haltemutter formschlüssig wirken kann.

Die Erfindung wird nachfolgend anhand bevorzugter Ausführungsbeispiele näher erläutert, die schematisch in der beiliegenden Figur dargestellt sind. Es zeigt schematisch:

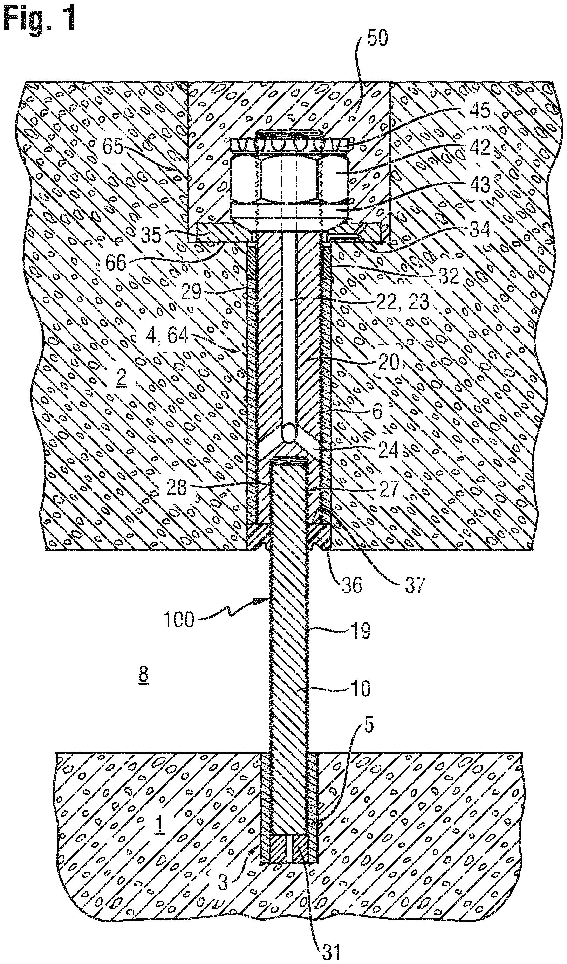

Figur 1: eine Längsschnittsansicht eines erfindungsgemässen Bauwerks mit einer erfindungsgemässen Ankervorrichtung.

Ein Ausführungsbeispiel eines erfindungsgemässen Bauwerks mit einer erfindungsgemässen Ankervorrichtung 100 ist in Figur 1 dargestellt. Das Bauwerk weist eine wandförmige Grundstruktur 1 auf, an der mittels der Ankervorrichtung 100 eine Platte 2 befestigt ist. Die Platte 2 ist dabei unter Bildung eines Zwischenraums 8 beabstandet an der Grundstruktur 1 befestigt.

Die Ankervorrichtung 100 weist eine im wesentlichen zylindrische erste Ankerstange 10 sowie eine koaxial zur ersten Ankerstange 10 angeordnete, im wesentlichen zylindrische und mit der ersten Ankerstange 10 verbundene zweite Ankerstange 20 auf. Die erste Ankerstange 10 ist an ihrem einen Ende in einer in der Grundstruktur 1 als Sackloch ausgebildeten Grundstrukturbohrung 3 aufgenommen und in der Grundstrukturbohrung 3 mittels eines Volumens einer chemisch erhärteten Masse 5 chemisch verankert. An ihrem gegenüberliegenden Ende ist die erste Ankerstange 10 in eine mit einem Innengewinde 28 versehene Bohrung 27 eingeschraubt, die stirnseitig in der durchmessergrösseren zweiten Ankerstange 20 ausgebildet ist.

Die erste Ankerstange 10 ist als Gewindestange ausgebildet und weist ein Aussengewinde 19 auf. Das Aussengewinde 19 weist dabei zumindest einen Gewindegang auf, der sich einerseits in die Grundstrukturbohrung 3 erstreckt und der dort die chemische Verankerung unterstützen kann, und der sich andererseits in die Bohrung 27 der zweiten Ankerstange 20 erstreckt, dort mit dem Innengewinde 28 der zweiten Ankerstange 20 korrespondiert und somit eine Schraubverbindung zwischen den beiden Ankerstangen 10 und 20 bewirkt.

Die zweite Ankerstange 20 ist in einer Plattenbohrung 4 aufgenommen, die in der Platte 2 als Durchgangsbohrung ausgebildet ist, und in dieser Plattenbohrung 4 mittels eines zweiten Volumens einer chemisch erhärteten Masse 6 chemisch verankert. Zum Zuführen der Masse 6 in die Plattenbohrung 4 weist die zweite Ankerstange 20 einen Injektionskanal 22 auf, welcher von der der Bohrung 27 abgewandten Stirnseite der zweiten Ankerstange 20 in die Mantelfläche der zweiten Ankerstange 20 führt. Der Injektionskanal 22 weist einen längs der Ankerstange 20 verlaufenden Zentrumskanal 23 auf, von dem, vorzugsweise drei, Stichbohrungen 24 mit Austrittsöffnungen in der Mantelfläche der zweiten Ankerstange 20 abzweigen.

Die Plattenbohrung 4 ist als Stufenbohrung ausgebildet und weist einen durchmesserkleineren Bereich 64 sowie einen durchmessergrösseren Bereich 65 auf, wobei zwischen diesen beiden Bereichen eine Ringstufe 66 gebildet ist. Die chemische Verankerung der zweiten Ankerstange 20 ist zumindest im durchmesserkleineren Bereich 64 gegeben, das heisst die erhärtete Masse 6 befindet sich zumindest im durchmesserkleineren Bereich 64.

Damit die Masse 6 vor dem Erhärten nicht unerwünscht aus der Plattenbohrung 4 austreten kann, weist die Ankervorrichtung 100 eine Dichtscheibe 35 sowie eine Elastomerscheibe 36 auf, welche die Plattenbohrung 4 auf gegenüberliegenden Seiten abdichten. Die Elastomerscheibe 36, welche die Plattenbohrung 4 zum Zwischenraum 8 hin abdichtet, umgibt die erste Ankerstange 10 und liegt an einer Ringstufe 37 an, die an der Stirnseite der zweiten Ankerstange 20 um die Bohrung 27 herum gebildet ist. Die Dichtscheibe 35 umgibt die zweite Ankerstange 20 und liegt an der Ringstufe 66 zwischen durchmesserkleinerem Bereich 64 und durchmessergrösserem Bereich 65 der Plattenbohrung 4 an.

Durch die Dichtscheibe 35 hindurch verläuft ein Entlüftungskanal 34. Über diesen Entlüftungskanal 34 kann die Luft, die beim Injizieren der erhärtenden Masse 6 aus dem durchmesserkleineren Bereich 64 der Plattenbohrung 4 verdrängt wird, entweichen.

Die zweite Ankerstange 20 weist ein Aussengewinde 29 auf. Auf dieses Aussengewinde 29 ist auf der der Grundstruktur 1 abgewandeten Seite der zweiten Ankerstange 20 eine Haltemutter 42 aufgeschraubt, welche über die Dichtscheibe 35 und vorzugsweise über eine zwischen Dichtscheibe 35 und Haltemutter 42 angeordnete Kugelscheibe gegen die Ringstufe 66 zwischen durchmesserkleinerem Bereich 64 und durchmessergrösserem Bereich 65 der Plattenbohrung 4 wirkt. Die Haltemutter 42 ist mittels einer Sicherungsmutter 45 gesichert.

Das Aussengewinde 29 der zweiten Ankerstange 20 erstreckt sich auch in den durchmesserkleineren Bereich 64 der Plattenbohrung 4 und somit in den Bereich der chemischen Verankerung mit der Platte 2, so dass das Aussengewinde 29 diese Verankerung unterstützen kann.

Die zweite Ankerstange 20 ist auf ihrer der Grundstruktur 1 abgewandten Seite mitsamt der Haltemutter 42 und der Sicherungsmutter 45 in der Plattenbohrung 4 versenkt, das heisst die Ankerstange 20, die Haltemutter 42 und die Sicherungsmutter 45 stehen nicht aus der Plattenbohrung 4 vor. Die Haltemutter 42 und die Sicherungsmutter 45 sind dabei im durchmessergrösseren Bereich 65 der Plattenbohrung 4 aufgenommen. Zum Zwecke des Brandschutzes ist der durchmessergrössere Bereich 65 der Plattenbohrung 4 mit einem Brandschutzmörtel 50 verfüllt.

Auch auf ihrer der Grundstruktur 1 zugewandten Seite, also auf der Seite, auf der vorzugsweise die Elastomerscheibe 36 angeordnet ist, ist die zweite Ankerstange 20 in der Plattenbohrung 4 versenkt. Die Bohrung 27 der zweiten Ankerstange 20 und/oder das Innengewinde 28 der zweiten Ankerstange 20 verlaufen somit vollständig im Inneren der Plattebohrung 4.

Für eine Zentrierung der Ankerstangen 10 und 20 in den Bohrungen 3 bzw. 4 vor dem Erhärten der Massen 5 bzw. 6 sind die Ankerstangen 10 und 20 jeweils mit einem Zentrierring 31 bzw. 32 versehen.

Die erfindungsgemässe Ankervorrichtung 100 kann insbesondere wie folgt gesetzt werden:
1. Erstellen der Grundstrukturbohrung 3 und der Plattenbohrung 4.
2. Bereichsweise Aufweitung der Plattenbohrung 4 unter Bildung des durchmessergrösseren Bereichs 65.
3. Gegebenenfalls Reinigung der Grundstrukturbohrung 3 und/oder der Plattenbohrung 4 z.B. mittels Bürsten.
4. Injektion der erhärtenden Masse 5 in die der Grundstrukturbohrung 3.
5. Einführen der Ankervorrichtung 100 mit Ankerstange 10, Zentrierring 31, Elastomerscheibe 36 und an der Ankerstange 10 befestigter Ankerstange 20 mit Zentrierring 32, Haltemutter 42, Sicherungsmutter 45, Kugelscheibe 43 und Dichtscheibe 35 durch die Plattenbohrung 4 hindurch in die Grundstrukturbohrung 3.
6. Nach Erhärten der Masse 5 in der Grundstrukturbohrung 3 Anziehen der Haltemutter 42.
7. Injektion der erhärtenden Masse 6 durch den Injektionskanal 22 hindurch in den Zwischenraum zwischen der zweiten Ankerstange 20 und der Platte 2 im Bereich der Plattenbohrung 4. Dabei entweicht Luft durch den Entlüftungskanal 34.
8. Nach Erhärten der Masse 6 in der Plattenbohrung 4 Anziehen der Sicherungsmutter 45 und Verfüllen des durchmessergrösseren Bereichs 65 der Plattenbohrung 4 mit Brandschutzmörtel 50.

Nach der Erfindung können die beiden Bohrungen 3 und 4 von derselben Position aus mit derselben Ausrüstung erstellt werden. Das Setzen und Injizieren kann ebenfalls von derselben Position aus erfolgen. Erfindungsgemäss ist der Aufwand zum Anbringen der Ankervorrichtung 100 somit besonders gering.

## Patentansprüche

1. Ankervorrichtung (100) zum Befestigen einer Platte (2) an einer Grundstruktur (1), mit einer ersten Ankerstange (10), die in einer in der Grundstruktur (1) vorgesehenen Grundstrukturbohrung (3) verankerbar ist, und
einer zweiten Ankerstange (20), die in einer in der Platte (2) vorgesehenen Plattenbohrung (4) verankerbar ist, und an der die erste Ankerstange (10) festlegbar ist,
wobei die zweite Ankerstange (20) zumindest einen Injektionskanal (22) aufweist, über den zum Verankern der zweiten Ankerstange (20) in der Plattenbohrung (4) eine erhärtende Masse (6) in die Plattenbohrung (4) injizierbar ist,
**dadurch gekennzeichnet,**
**dass** die zweite Ankerstange (20) eine Bohrung (27) aufweist, in welcher die erste Ankerstange (10) aufgenommen und festgelegt ist.

2. Ankervorrichtung (100) nach Anspruch 1,
**dadurch gekennzeichnet,**
**dass** auf der ersten Ankerstange (10) eine Elastomerscheibe (36) zum Abdichten der Plattenbohrung (4) angeordnet ist, wobei die Elastomerscheibe (36) vorzugsweise an der zweiten Ankerstange (20) anliegt.

3. Ankervorrichtung (100) nach einem der vorstehenden Ansprüche,
**dadurch gekennzeichnet,**
**dass** die Bohrung (27) in der zweiten Ankerstange (20) ein Innengewinde (28) aufweist, in welches die erste Ankerstange (10) eingeschraubt ist.

4. Ankervorrichtung (100) nach einem der vorstehenden Ansprüche,
**dadurch gekennzeichnet,**
**dass** die erste Ankerstange (10) zumindest einen Aussengewindegang aufweist, welcher sich im wesentlichen über die gesamte Länge der ersten Ankerstange (10) erstreckt.

5. Ankervorrichtung (100) nach einem der vorstehenden Ansprüche,
**dadurch gekennzeichnet,**
**dass** auf der zweiten Ankerstange (20) eine Dichtscheibe (35) zum Abdichten der Plattenbohrung (4) angeordnet ist, wobei die Dichtscheibe (35) zumindest einen Entlüftungskanal (34) aufweist.

6. Ankervorrichtung (100) nach einem der vorstehenden Ansprüche,
**dadurch gekennzeichnet,**
**dass** auf der zweiten Ankerstange (20) eine Haltemutter (42) zum Unterstützen der Verankerung der zweiten Ankerstange (20) in der Plattenbohrung (4) angeordnet ist.

7. Ankervorrichtung (100) nach Anspruch 5 und 6,
**dadurch gekennzeichnet,**
**dass** die Haltemutter (42) über eine Kugelscheibe (43) auf die Dichtscheibe (35) wirkt.

8. Ankervorrichtung (100) nach einem der vorstehenden Ansprüche,
**dadurch gekennzeichnet,**
**dass** auf der ersten Ankerstange (10) zumindest ein Zentrierring (31) angeordnet ist, und
**dass** auf der zweiten Ankerstange (20) zumindest ein weiterer Zentrierring (32) angeordnet ist.

9. Bauwerk mit einer Grundstruktur (1), einer Platte (2) und einer Ankervorrichtung (100) zum Befestigen der Platte (2) an der Grundstruktur (1) nach einem der Ansprüche 1 bis 8,
wobei die Grundstruktur (1) eine Grundstrukturbohrung (3) aufweist, in der die erste Ankerstange (10) verankert ist, und die Platte (2) eine als Durchgangsbohrung ausgebildete Plattenbohrung (4) aufweist, in der die zweite Ankerstange (20) verankert ist.

10. Bauwerk nach Anspruch 9,
**dadurch gekennzeichnet,**
**dass** die Ankervorrichtung (100) auf ihrer der Grundstruktur (1) abgewandten Seite in der Plattenbohrung (4) versenkt ist, und
**dass** die Ankervorrichtung (100) auf ihrer der Grundstruktur (1) abgewandten Seite von Brandschutzmörtel (50) überdeckt ist, der sich in der Plattenbohrung (4) befindet.

11. Bauwerk nach Anspruch 9 oder 10,
**dadurch gekennzeichnet,**
**dass** die Plattenbohrung (4) als Stufenbohrung ausgebildet ist.
